# EUROPÄISCHE PATENTSCHRIFT

(11) **EP 1 400 411 B1**
(45) Veröffentlichungstag und Bekanntmachung des Hinweises auf die Patenterteilung: **30.07.2008**
(21) Anmeldenummer: 03020188.3
(22) Anmeldetag: 05.09.2003
(51) Int. Cl.: B60R 9/04, B62D 25/06

(54) **Fahrzeugdach mit einer Lastentragvorrichtung**
Vehicle roof with load carrier
Toit de véhicule avec porte-bagages

(30) Priorität: 19.09.2002 DE 10243654
(43) Veröffentlichungstag der Anmeldung: 24.03.2004
(73) Patentinhaber: Webasto AG, 82131 Stockdorf (DE)
(72) Erfinder: De Gaillard, Francois, 85390 Mouilleron en Pareds (FR); Kölbl, Michael, 82061 Neuried (DE); Rudolph, Thomas, 82229 Hechendorf (DE)
(74) Vertreter: Konnerth, Dieter Hans

(56) Entgegenhaltungen:
- EP-A- 1 004 476
- DE-A- 3 429 880
- DE-A- 4 018 009
- DE-A- 19 729 044
- DE-U- 9 207 442
- DE-U- 29 516 322

## Beschreibung

Die Erfindung betrifft ein Fahrzeugdach mit einer an einer Dachstruktur angebrachten Lastentragvorrichtung gemäß dem Oberbegriff des Anspruchs 1.

Aus der US 6,415,970 B1 ist ein Fahrzeugdach mit einer Lastentragvorrichtung bekannt geworden, die zwei an den seitlichen Dachrändern fest angebrachte, längs verlaufende Befestigungsschienen aufweist. Um Lasten auf dem Dach transportieren zu können, müssen an den Befestigungsschienen vom Dach abstehende Querträger als Lastenträger befestigt werden, an denen auch weitere Trägereinrichtungen wie z. B. für Fahrräder bedarfsweise angebracht werden können.

Aus der DE 197 29 044 A1 ist ein gattungsgemäßes Fahrzeugdach bekannt geworden, das eine in eine Dachöffnung einsetzbare und an seitlichen Dachholmen festlegbare Dachabdeckung aufweist. Die Dachabdeckung enthält sich in Längsrichtung erstreckende Staufächer oder Fahrradhalter.

Aufgabe der Erfindung ist es, ein eingangs genanntes Fahrzeugdach mit einer Lastentragvorrichtung zu schaffen, die im wesentlichen ohne Vorbereitungsaufwand für den Lastentransport zur Verfügung steht und die ebenfalls ohne Aufwand in eine Außergebrauchstellung gebracht werden kann, in der sie keine Behinderung darstellt.

Diese Aufgabe wird bei dem eingangs genannten Fahrzeugdach mit einer Lastentragvorrichtung erfindungsgemäß dadurch gelöst, dass die Trägereinheit an Querrahmen oder Querträgern des Fahrzeugdaches befestigt ist.

Vorteilhafte Ausgestaltungen der Erfindung sind in den Unteransprüchen angegeben.

Durch die Integration in die Dachfläche kann die Lastentragvorrichtung strömungsgünstig geformt werden. Da sie die zum Lastentransport erforderlichen Befestigungseinrichtungen enthält, müssen diese für eine Transportaufgabe an der Trägereinheit nicht speziell angebracht werden. Wenn die Trägereinheit nicht benötigt wird, stellt sie durch ihre Integration in das Fahrzeugdach keine das Fahrzeug beeinträchtigende Komponente dar.

Da die zumindest eine Trägereinheit am Fahrzeugdach in Längsrichtung angeordnet und an Querrahmen oder Querträgern des Fahrzeugdaches befestigt ist, bietet sie einen besonders geringen Strömungswiderstand aufgrund geringer Querschnittsfläche. Der über die Dachfläche hinausstehende Teil der Trägereinheit hat beispielsweise einen halbrunden oder halbelliptischen Querschnitt oder auch Rechteckquerschnitt mit abgerundeten Kanten. Die Trägereinheit kann auch auf einer festen Dachlängsstrebe angeordnet sein, so daß bei einem Glasdach, bei dem Glasdeckel oder Glasflächenteile der Dachhaut neben und zwischen den Trägereinheiten angeordnet sind, der nicht durchsichtige Bereich der Dachlängsstrebe für die Trägereinheit genutzt wird. Damit verbessert sich das optische Erscheinungsbild des eine Lasttragvorrichtung aufweisenden Fahrzeugs.

Um vielfältige Lasten mit den mitgeführten Befestigungseinrichtungen transportieren zu können, ist es zweckmäßig, wenn diese zum Aufnehmen und/oder Befestigen von gleichen oder von unterschiedlichen Lasten angepaßt sind.

Vorzugsweise sind die Befestigungseinrichtungen an der Trägereinheit bewegbar gelagert und können zwischen einer Ruhestellung und einer Funktionsstellung zur Lastenaufnahme verstellt werden. Die Möglichkeit der Verstellung gestattet einerseits die versenkte und damit strömungsgünstige Anordnung der Befestigungseinrichtungen an der Trägereinheit und andererseits bedarfsweise unterschiedliche Funktionsstellungen zum Einstellen auf die zu transportierenden Lasten oder unterschiedliche Sportgeräte wie Ski, Fahrräder, Surfbretter oder dergleichen. Insbesondere sind die Befestigungseinrichtungen als von der Trägereinheit ausfahrbare oder ausklappbare Halterungen zur Lastenaufnahme gebildet. Um Lasten beidseits der in Längsrichtung angeordneten Trägereinheit aufnehmen zu können, ist es zweckmäßig, wenn die Befestigungseinrichtungen in ihre Funktionsstellungen auf gegenüberliegende Seiten der Trägereinheit verstellbar sind und wenn die Trägereinheit oder die Trägereinheiten von den seitlichen Dachrändern beabstandet angeordnet ist bzw. sind, so daß die Lasten weitgehend über dem Dach angeordnet sind und nicht seitlich über das Dach hinaus stehen.

In einer besonders vorteilhaften Gestaltung des Fahrzeugdaches enthält dieses seitlich jeweils eine Dachreling, an der sich die Befestigungseinrichtungen bzw. die Halterungen in ihrer Funktionsstellung abstützen können. Damit wird die Belastung am Fahrzeugdach gleichmäßiger verteilt.

Für den Transport bestimmter Lasten wie z. B. von Fahrrädern ist es zweckmäßig, wenn die Trägereinheit zumindest ein nach oben ausfahrbares oder ausschwenkbares Halte- oder Stützmittel aufweist, das die Last zusätzlich sichert.

Vorzugsweise enthält die Trägereinheit an ihrer Oberseite eine Auflage oder Auflagefläche, die z. B. aus Kunststoff, Gummi oder gummiähnlichem Material besteht, auf dem Lasten rutschsicher und gegen Verkratzen geschützt abgelegt werden können. Die Auflage ist beispielsweise eine längliche Wulst, die sich durchgehend oder unterbrochen über einen Teil der Trägereinrichtung oder die ganze Trägereinrichtung erstreckt.

In einer bevorzugten Gestaltung enthält die Unterseite der Trägereinheit zumindest eine vom Fahrzeuginnenraum zugängliche oder für den Fahrzeuginnenraum bestimmte Nutzeinrichtung. Damit erhält die bezüglich dem Lastentransport schon multifunktionale Trägereinheit eine weitere Nutzungsmöglichkeit.

Schließlich kann die Trägereinheit Lufteintrittsöffnungen und/oder Luftaustrittsöffnungen sowie Luftkanäle zum Belüften und/oder Entlüften des Fahrzeuginnenraums aufweisen.

Die Dachflächenteile oder Deckel sind insbesondere aus transparentem Material wie Kunststoff oder Glas hergestellt und bilden in ihrer Anordnung am Fahrzeugdach neben der zumindest einen Trägereinheit die Dachhaut.

Die zumindest eine Trägereinheit kann ein die Dachstruktur versteifendes Teil darstellen, so daß sie die Funktion einer Dachstrebe übernehmen kann. Wenn jedoch schon eine stabile Strebe am Dach vorhanden ist, kann die Trägereinheit dementsprechend mit geringerer Festigkeit gebaut werden.

Nachfolgend wird ein Ausführungsbeispiel des Fahrzeugdaches mit einer Lastentragvorrichtung unter Bezugnahme auf die Zeichnung näher erläutert. Es zeigt:
- Fig. 1: in perspektivischer Draufsicht ein Fahrzeugdach mit einer am Fahrzeugdach integrierten Lastentragvorrichtung;

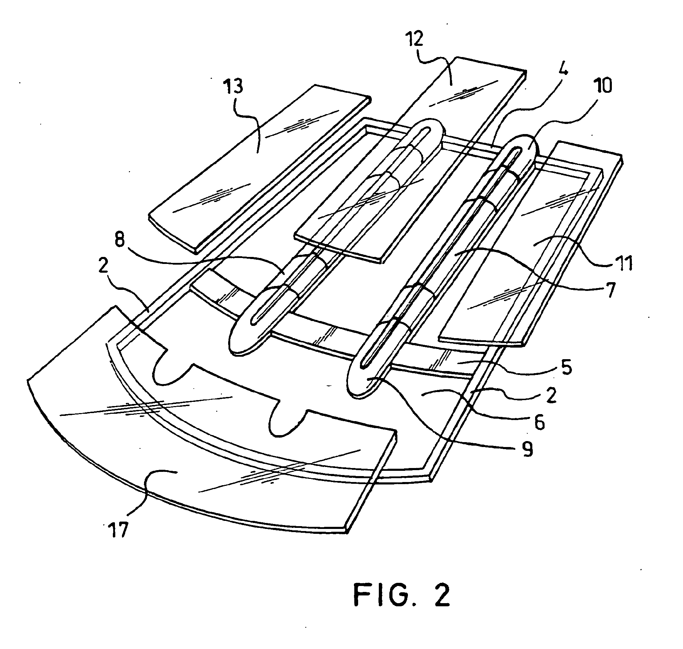

- Fig. 2: in perspektivischer Draufsicht das Fahrzeugdach mit der Lastentragvorrichtung sowie mehrere Dachflächenteile in Explosionsdarstellung;
- Fig. 3: in einer Querschnittansicht das Fahrzeugdach mit einer Trägereinheit der Lastentragvorrichtung;
- Fig. 4: in einer Querschnittansicht gemäß Fig. 3 das Fahrzeugdach mit der Trägereinheit sowie mit davon ausgeklappten Befestigungselementen;
- Fig. 5: in perspektivischer Ansicht die Dachunterseite des Fahrzeugdaches; und
- Fig.6: in perspektivischer Ansicht das Fahrzeugdach mit einem abgewandelten Ausführungsbeispiel der Trägereinheit.

Ein Fahrzeug, beispielsweise ein Personenwagen, Kombi oder Van, enthält ein Fahrzeugdach 1, das jeweils einen seitlichen Dachlängsholm 2 sowie einen vorderen Querholm 3, der beispielsweise einen Windlauf als oberen Abschluß der Windschutzscheibe bildet, und einen hinteren Querholm 4 als Teile einer karosseriefesten Dachstruktur aufweist. Eine Querstrebe 5 verbindet die beiden Dachlängsholme 2 in etwa in einem vorderen Drittel der von den genannten Bauteilen umgebenen Dachöffnung 6. Eine am Fahrzeugdach 1 vorgesehene Lastentragvorrichtung enthält zwei längliche Trägereinheiten 7 und 8, die am Fahrzeugdach 1 in Längsausrichtung angeordnet sind und voneinander sowie von dem jeweiligen Dachseitenrand bzw. Dachlängsholm 2 in annähernd gleichem Abstand angeordnet sind.

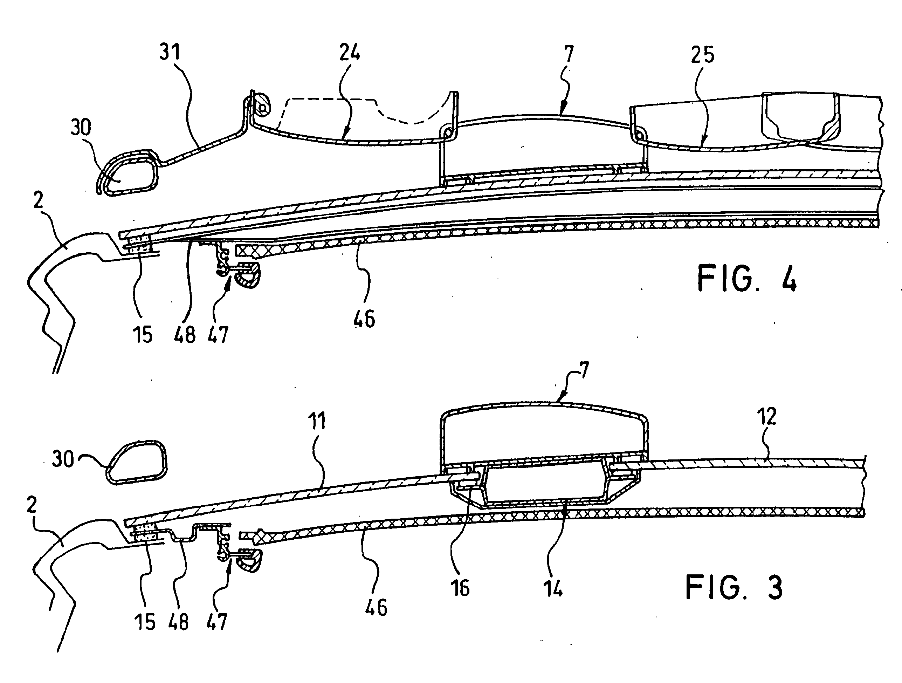

Jede Trägereinheit 7, 8 ist an ihrem Vorderabschnitt 9 an der Querstrebe 5 und an ihrem Hinterabschnitt 10 an dem hinteren Querholm 4 derart fest angebracht, daß sie teilweise oder gänzlich oberhalb der Dachfläche angeordnet ist, die von insbesondere transparenten Dachflächenteilen 11, 12 und 13 gebildet ist. Das Fahrzeugdach 1 kann auch jeweils eine Längsstrebe 14 (siehe Fig. 3) aufweisen, die unterhalb der Trägereinheit 7, 8 verläuft und an deren Oberseite die Trägereinheit 7, 8 fest angebracht ist. Die Längsstrebe 14 bildet somit eine steife Tragstruktur für die Trägereinheit 7, 8. Andererseits kann die Trägereinheit 7, 8 selbst mit einer solchen Festigkeit und Steifheit gebildet sein, daß die Längsstrebe 14 als Verstärkung nicht benötigt wird. Wenn die Längsstrebe 14 vorhanden ist (Fig.3), ist das jeweilige seitliche äußere Dachflächenteil 11 bzw. 13 auf einem Flansch 15 an dem Dachlängsholm 2 und auf einem Flansch 16 der Längsstrebe 14 befestigt. Die Trägereinheit 7, 8 überdeckt den Innenrand des äußeren Dachflächenteils 11 bzw. 13. Ein vorderes Dachflächenteil 17 verschließt den Vorderteil der Dachöffnung 6 zwischen dem Windlauf 3 und der Querstrebe 5.

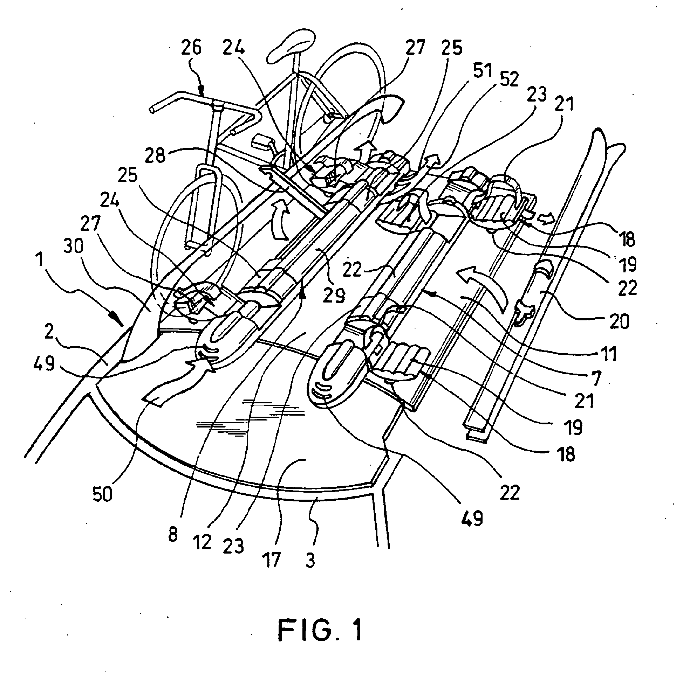

Jede Trägereinheit 7, 8 enthält Befestigungselemente für auf dem Fahrzeugdach 1 zu transportierende Lasten. Die in Fig. 1 auf der linken Hälfte des Fahrzeugdaches 1 dargestellte Trägereinheit 7 enthält in ihrem Vorderabschnitt 9 und in ihrem Hinterabschnitt 10 jeweils eine Halterung 18, die aus ihrer Schließstellung an der Trägereinheit 7 um eine Längsschwenkachse seitlich nach außen schwenkbar oder umklappbar ist, so daß auf einer Auflagefläche 19 an der Innenseite der Halterung 18 Ski 20 oder andere längliche Lasten angebracht und mit einem Riemen 21 gesichert werden können. Die Halterung 18 enthält auf ihrer Außenoder Oberseite ein elastisches Element 22 in Form einer länglichen Wulst aus Gummi oder Kunststoff. Das elastische Element 22 stützt die ausgeklappte Halterung 18 auf dem Dachflächenteil 11 ab. Mittels einer (nicht dargestellten) Verrastung oder Verriegelung kann die Halterung 18 in ihrer Offenstellung festgelegt und verriegelt werden.

Die Trägereinheit 7 enthält zwei weitere Befestigungselemente oder Halterungen 23, die jeweils vor oder hinter den beschriebenen ersten Halterungen 18 angeordnet und in entsprechender Weise gebildet sind, jedoch seitlich nach innen zur Fahrzeugdachmitte hin schwenkbar sind. Somit kann die Trägereinheit 7 beidseits jeweils eine längliche Last wie z. B. ein Paar Ski 20 aufnehmen.

Die auf der rechten Hälfte des Fahrzeugdachs 1 dargestellte Trägereinheit 8 enthält jeweils zwei vergleichbare Paare von Befestigungselementen oder Halterungen 24 und 25, die zur Aufnahme von Fahrrädern 26 angepaßt sind. Die Innenseite jeder Halterung 24, 25 ist dementsprechend mit einer Schiene oder Rinne 27 zur Aufnahme eines Rades des Fahrrads 26 gebildet. Zum Abstützen des aufrecht stehenden Fahrrads 26 ist eine Stützeinrichtung vorgesehen, die z. B. als Stützarm 28 gebildet ist, der in dem Mittelteil 29 der Trägereinheit 8 aufgenommen ist und um eine hintere Schwenklagerung nach oben in seine Stützstellung ausgeklappt wird, so daß das Fahrrad 26 mit ihm fest verbunden werden kann.

Wenn alle Befestigungselemente in ihrer Schließstellung angeordnet sind, bildet das elastische Element 22 eine vom Vorderabschnitt 9 bis zum Hinterabschnitt 10 durchgehende und insbesondere rutschfeste Auflage für z. B. flächiges Ladegut. Die Befestigung des Ladeguts kann mittels Riemen oder Spanngurten erfolgen, die an Ösen oder Schlitzen an der Trägereinheit 7, 8 festlegbar sind (nicht dargestellt).

Wenn das Fahrzeugdach 1 seitlich jeweils eine Dachreling 30 aufweist, kann diese zum Befestigen des Ladeguts mittels Riemen oder Spanngurte dienen. Die seitlich nach außen ausklappbaren Befestigungselemente 23 bis 25 können derart gestaltet sein, daß sie sich in ihrer ausgeklappten Stellung an der Dachreling 30 abstützen (siehe Fig. 4), wobei sie sich entweder über einen zusätzlichen ausfahrbaren oder ausklappbaren Arm 31 oder bei entsprechender Anordnung unmittelbar an der Dachreling 30 abstützen und daran auch verriegelt oder mit einem Riemen befestigt werden können.

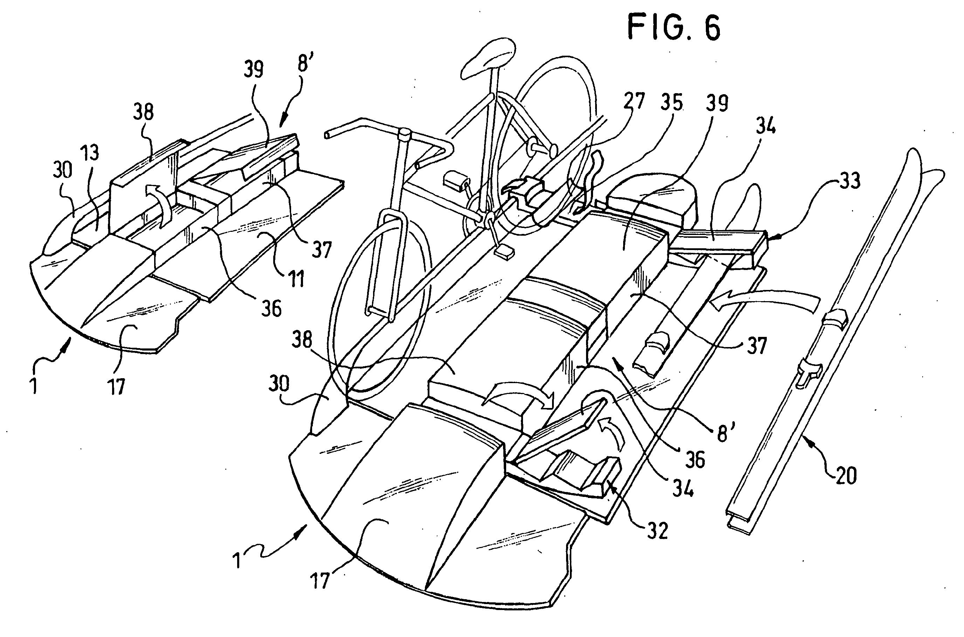

Diese Abstützung einer ausklappbaren Halterung an der Dachreling 30 ist auch bei dem in Fig. 6 dargestellten weiteren Ausführungsbeispiel der Trägereinheit 8' gezeigt. Diese Trägereinheit 8' ist auf dem Fahrzeugdach 1 zentral angeordnet und enthält eine vordere und eine hintere seitlich ausklappbare Halterung 32 und 33 mit einer konturierten Auflagefläche für Lasten wie z. B. zwei Paar Ski. Ein Schließbügel 34 oder eine Schließplatte ist an der Halterung 32 bzw. 33 nahe ihrer Schwenkachse schwenkbar gelagert und kann in eine Schließstellung über die Ski geschwenkt und verriegelt werden.

Bei ausreichender Breite der Trägereinheit 8' können zwei seitlich ausschwenkende Halterungen in einer Querausnehmung der Trägereinheit 8' unmittelbar benachbart angeordnet und zu beiden Dachseiten hin ausschwenkbar sein. Beispielhaft ist eine hintere Halterung 35 dargestellt, die zur Aufnahme eines Fahrrades 26 vorbereitet ist und sich in ihrer aufgeklappten Stellung an der Dachreling 30 abstützt und daran befestigt ist.

Generell können die Befestigungen oder Halterungen an ihren Schwenklagerungen austauschbar gelagert sein, so daß bedarfsweise für unterschiedliche Verwendungszwecke geformte Befestigungen und Halterungen an jeder Trägereinheit 7, 8, 8' angebracht werden können.

Die in Fig. 6 dargestellte Trägereinheit 8' enthält zwei hintereinander angeordnete Ladeboxen 36 und 37 mit nach oben zu öffnenden Deckeln 38 bzw. 39. Die Ladeboxen 36 und 37 können von der Trägereinheit 8' entfernt werden und gegen andere Ladeboxen oder andere Trägermodule mit anderen Funktionen ausgetauscht werden. Das vordere Dachflächenteil 17 kann eine strömungsgünstig geformte Oberseite aufweisen, die an die Stirnfläche der Trägereinheit 8' angepaßt ist.

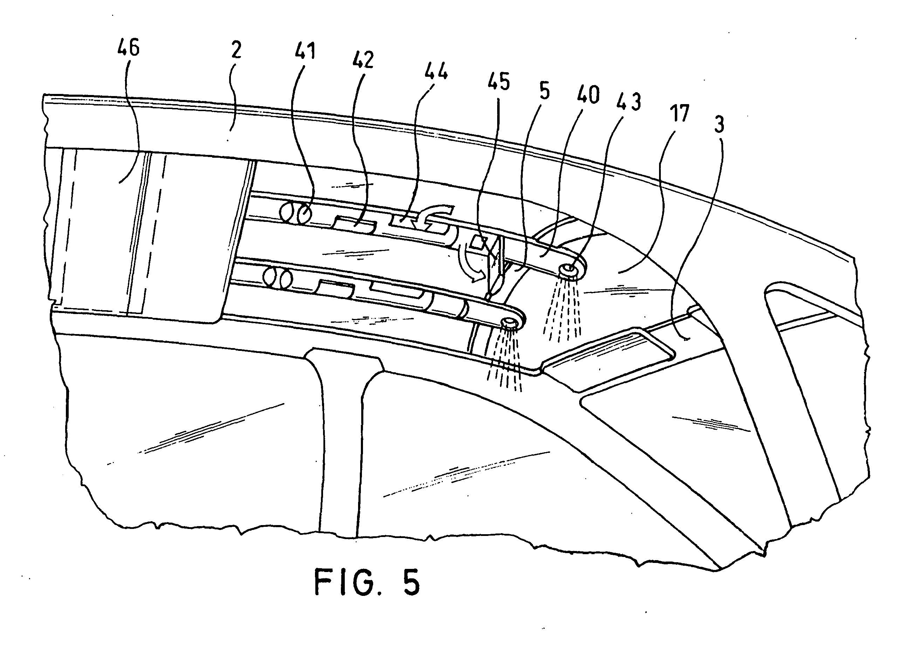

Die Trägereinheiten 7, 8, 8' können an ihren Unterseiten (siehe Fig. 5), die am Fahrzeugdach 1 zum Fahrzeuginnenraum gerichtet sind, mit zusätzlichen Nutzund Funktionseinheiten versehen sein. Die Unterseite ist beispielsweise als eigener Trägerkörper 40 mit den integrierten Nutz- und Funktionseinheiten gebildet, die beispielsweise Haken oder Griffe 41, Innenraumleuchten 42, Spotleuchten 43, Ablagefächer 44, ausklappbare Spiegel 45 oder LCD-Bildschirme sein können.

Unterhalb des insbesondere als Glasdach gebildeten Fahrzeugdaches 1 kann eine Schiebehimmelanordnung vorgesehen sein, deren einzelne Schiebehimmelteile 46 an seitlichen Führungen 47 geführt sind, die an einem an den beiden seitlichen Dachlängsholmen 2 befestigten Rahmen 48 angebracht sind.

Zur Belüftung des Fahrzeuginnenraums kann die Trägereinheit 7 bzw. 8 in ihrem Vorderabschnitt 9 Lufteintrittsöffnungen 49 aufweisen (siehe Fig. 1), durch die Frischluft 50 über zugeordnete Kanäle in der Trägereinheit 7, 8 in den Fahrzeuginnenraum einströmen kann. Über im Hinterabschnitt 10 der Trägereinheit 7, 8 angebrachte Luftaustrittsöffnungen 51 kann verbrauchte Luft 52 aus dem Fahrzeuginnenraum wieder abströmen. Damit kann eine Belüftung über das Fahrzeugdach und den Innenhimmel erzielt werden, wobei die einströmende Luftmenge durch veränderbar gestaltete Strömungsquerschnitte einstellbar ist.

### Bezugszeichenliste

- 1: Fahrzeugdach
- 2: Dachlängsholm
- 3: vorderer Querholm
- 4: hinterer Querholm
- 5: Querstrebe
- 6: Dachöffnung
- 7: Trägereinheit
- 8: Trägereinheit
- 8': Trägereinheit
- 9: Vorderabschnitt
- 10: Hinterabschnitt
- 11: Dachflächenteil
- 12: Dachflächenteil
- 13: Dachflächenteil
- 14: Längsstrebe
- 15: Flansch
- 16: Flansch
- 17: vorderes Dachflächenteil
- 18: Halterung
- 19: Auflagefläche
- 20: Ski
- 21: Riemen
- 22: elastisches Element
- 23: Halterung
- 24: Halterung
- 25: Halterung
- 26: Fahrrad
- 27: Rinne
- 28: Stützarm
- 29: Mittelteil
- 30: Dachreling
- 31: Arm
- 32: Halterung
- 33: Halterung
- 34: Schließbügel
- 35: Halterung
- 36: Ladebox
- 37: Ladebox
- 38: Deckel
- 39: Deckel
- 40: Trägerkörper
- 41: Griff
- 42: Innenraumleuchte
- 43: Spotleuchte
- 44: Ablagefach
- 45: Spiegel
- 46: Schiebehimmelteil
- 47: Führung
- 48: Rahmen
- 49: Lufteintrittsöffnung
- 50: Frischluft
- 51: Luftaustrittsöffnung
- 52: verbrauchte Luft

## Patentansprüche

1. Fahrzeugdach mit einer an einer Dachstruktur angebrachten Lastentragvorrichtung, die zumindest eine am Fahrzeugdach (1) in Längsrichtung angeordnete Trägereinheit (7, 8, 8') aufweist, die am Fahrzeugdach (1) fest angebracht und in der Dachfläche integriert ist und Befestigungseinrichtungen (18, 23) zum Aufnehmen und/oder Befestigen von Lasten (20, 26) aufweist
**dadurch gekennzeichnet,**
**dass** die Trägereinheit (7, 8, 8') an Querrahmen oder Querträgern (4, 5) des Fahrzeugdaches (1) befestigt ist.

2. Fahrzeugdach nach Anspruch 1,
**dadurch gekennzeichnet, dass** die Trägereinheit (7, 8, 8') von den seitlichen Dachrändem (2) beabstandet angeordnet ist.

3. Fahrzeugdach nach Anspruch 1 oder 2,
**dadurch gekennzeichnet, dass** die Befestigungseinrichtungen (18, 23, 24, 25) zum Aufnehmen und/oder Befestigen von gleichen oder von unterschiedlichen Lasten gebildet sind.

4. Fahrzeugdach nach einem der Ansprüche 1 bis 3,
**dadurch gekennzeichnet, dass** die Befestigungseinrichtungen (18, 23, 24, 25) an der Trägereinheit (7, 8, 8') bewegbar gelagert sind und zwischen einer Ruhestellung und einer Funktionsstellung zur Lastenaufnahme verstellbar sind.

5. Fahrzeugdach nach einem der Ansprüche 1 bis 4,
**dadurch gekennzeichnet, dass** die Befestigungseinrichtungen als von der Trägereinheit (7, 8, 8') ausfahrbare oder ausklappbare Halterungen (18, 23, 24, 25) zur Lastenaufnahme gebildet sind.

6. Fahrzeugdach nach einem der Ansprüche 1 bis 5,
**dadurch gekennzeichnet, dass** die Befestigungseinrichtungen bzw. die Halterungen in ihrer Funktionsstellung an einer seitlich am Fahrzeugdach (1) angeordneten Dachreling (30) abgestützt sind.

7. Fahrzeugdach nach einem der Ansprüche 1 bis 6,
**dadurch gekennzeichnet, dass** die Befestigungseinrichtungen (18, 23, 24, 25) in ihre Funktionsstellungen auf gegenüberliegende Seiten der Trägereinheit (7, 8, 8') verstellbar sind.

8. Fahrzeugdach nach einem der Ansprüche 1 bis 7,
**dadurch gekennzeichnet, dass** die Trägereinheit (7, 8) zumindest ein nach oben ausfahrbares oder ausschwenkbares Halte- oder Stützmittel (28) aufweist.

9. Fahrzeugdach nach einem der Ansprüche 1 bis 8,
**dadurch gekennzeichnet, dass** die Trägereinheit (7, 8) an ihrer Oberseite eine Auflagefläche (22) aufweist.

10. Fahrzeugdach nach einem der Ansprüche 1 bis 9,
**dadurch gekennzeichnet, dass** die Unterseite der Trägereinheit (7, 8) zumindest eine vom Fahrzeuginnenraum zugängliche oder für den Fahrzeuginnenraum bestimmte Nutzeinrichtung (41 bis 45) aufweist.

11. Fahrzeugdach nach einem der Ansprüche 1 bis 10,
**dadurch gekennzeichnet, dass** die Trägereinheit (7, 8, 8') zumindest eine von oberhalb des Daches zugängliche Ladebox (36, 37) aufweist.

12. Fahrzeugdach nach einem der Ansprüche 1 bis 11,
**dadurch gekennzeichnet, dass** die Trägereinheit (7, 8) Lufteintrittsöffnungen (49) und/oder Luftaustrittsöffnungen (51) zum Belüften und/oder Entlüften des Fahrzeuginnenraums aufweist.

13. Fahrzeugdach nach einem der Ansprüche 1 bis 12,
**dadurch gekennzeichnet, dass** die Befestigungseinrichtungen (18, 23, 24, 25) an der Trägereinheit (7, 8, 8') austauschbar angebracht sind.

14. Fahrzeugdach nach einem der Ansprüche 1 bis 13,
**dadurch gekennzeichnet, dass** seitlich am Fahrzeugdach (1) jeweils eine Dachreling (30) fest angebracht ist.

15. Fahrzeugdach nach einem der Ansprüche 1 bis 14,
**dadurch gekennzeichnet, dass** Deckel (11, 12, 13, 17), insbesondere transparente Deckel, am Fahrzeugdach (1) neben der zumindest einen Trägereinheit (7, 8) befestigt sind und die Dachhaut bilden.

16. Fahrzeugdach nach einem der Ansprüche 1 bis 15,
**dadurch gekennzeichnet, dass** die Trägereinheit (7, 8, 8') ein die Dachstruktur versteifendes Teil bildet.

17. Fahrzeugdach nach einem der Ansprüche 1 bis 16,
**dadurch gekennzeichnet, dass** zwei Trägereinheiten (7, 8) am Fahrzeugdach (1) nebeneinander angebracht sind.

## Claims

1. Vehicle roof having a load carrier which is fitted to a roof structure and has at least one carrier unit (7, 8, 8') which is arranged in the longitudinal direction on the vehicle roof (1), which is fitted firmly to the vehicle roof (1) and is integrated into the roof surface and has fixing devices (18, 23) for holding and/or fixing loads (20, 26),
**characterized in that**
the carrier unit (7, 8, 8') is fixed to transverse frames or transverse supports (4, 5) of the vehicle roof (1).

2. Vehicle roof according to Claim 1, **characterized in that** the carrier unit (7, 8, 8') is arranged at a distance from the roof side edges (2).

3. Vehicle roof according to Claim 1 or 2, **characterized in that** the fixing devices (18, 23, 24, 25) are formed to hold and/or fix identical or different loads.

4. Vehicle roof according to one of Claims 1 to 3, **characterized in that** the fixing devices (18, 23, 24, 25) are mounted on the carrier unit (7, 8, 8') such that they can move and can be displaced between a rest position and a functional position to hold a load.

5. Vehicle roof according to one of Claims 1 to 4, **characterized in that** the fixing devices are formed as mountings (18, 23, 24, 25) to hold a load, which can be moved out or folded out from the carrier unit (7, 8, 8').

6. Vehicle roof according to one of Claims 1 to 5, **characterized in that** the fixing devices or the mountings, when in their functional position, are supported on a roof rail (30) arranged at the side on the vehicle roof (1).

7. Vehicle roof according to one of Claims 1 to 6, **characterized in that** the fixing devices (18, 23, 24, 25) can be displaced into their functional positions on opposite sides of the carrier unit (7, 8, 8').

8. Vehicle roof according to one of Claims 1 to 7, **characterized in that** the carrier unit (7, 8) has at least one holding or supporting means (28) that can be moved out or swivelled out upwards.

9. Vehicle roof according to one of Claims 1 to 8, **characterized in that** the carrier unit (7, 8) has a supporting surface (22) on its upper side.

10. Vehicle roof according to one of Claims 1 to 9, **characterized in that** the underside of the carrier unit (7, 8) has at least one utility device (41 to 45) which is accessible from the vehicle interior or intended for the vehicle interior.

11. Vehicle roof according to one of Claims 1 to 10, **characterized in that** the carrier unit (7, 8, 8') has at least one roof box (36, 37) which is accessible from above the roof.

12. Vehicle roof according to one of Claims 1 to 11, **characterized in that** the carrier unit (7, 8) has air inlet openings (49) and/or air outlet openings (51) for active and/or passive ventilation of the vehicle interior

13. Vehicle roof according to one of Claims 1 to 12, **characterized in that** the fixing devices (18, 23, 24, 25) are interchangeably fitted to the carrier unit (7, 8, 8').

14. Vehicle roof according to one of Claims 1 to 13, **characterized in that** a roof rail (30) is in each case firmly fitted to the vehicle roof (1) at the side.

15. Vehicle roof according to one of Claims 1 to 14, **characterized in that** panels (11, 12, 13, 17), in particular transparent panels, are fixed to the vehicle roof (1) beside the at least one carrier unit (7, 8) and form the roof skin.

16. Vehicle roof according to one of Claims 1 to 15, **characterized in that** the carrier unit (7, 8, 8') forms a component stiffening the roof structure.

17. Vehicle roof according to one of Claims 1 to 16, **characterized in that** two carrier units (7, 8) are fitted to the vehicle roof (1) beside each other.

## Revendications

1. Toit de véhicule comprenant un dispositif porte-bagages aménagé sur une structure de toit, qui présente au moins une unité de support (7, 8, 8') disposée dans la direction longitudinale sur le toit de véhicule (1), laquelle unité est montée fixe sur le toit de véhicule (1) et est intégrée dans la surface du toit et présente des dispositifs de fixation (18, 23) destinés à loger et/ou fixer des bagages (20, 26)
**caractérisé en ce que**
l'unité de support (7, 8, 8') est fixée sur les cadres transversaux l'arcade ou les entretoises transversales (4,5) du toit de véhicule (1).

2. Toit de véhicule selon la revendication 1,
**caractérisé en ce que** l'unité de support (7, 8, 8') est disposée à distance des bords latéraux du toit (2).

3. Toit de véhicule selon la revendication 1 ou 2,
**caractérisé en ce que** les dispositifs de fixation (18, 23, 24, 25) sont formés pour recevoir et/ou fixer des bagages identiques ou différents.

4. Toit de véhicule selon l'une quelconque des revendications 1 à 3,
**caractérisé en ce que** les dispositifs de fixation (18, 23, 24, 25) sont logés de manière mobile sur l'unité de support (7, 8, 8') et peuvent être déplacés entre une position de repos et une position opérationnelle destinée à recevoir des bagages.

5. Toit de véhicule selon l'une quelconque des revendications 1 à 4,
**caractérisé en ce que** les dispositifs de fixation sont formés comme des supports (18, 23, 24, 25) extensibles ou dépliables de l'unité de support (7, 8, 8'), et destinés à recevoir les bagages.

6. Toit de véhicule selon l'une quelconque des revendications 1 à 5,
**caractérisé en ce que** les dispositifs de fixation ou les supports dans leur position opérationnelle s'appuient sur une rambarde (30) disposée latéralement sur le toit de véhicule (1).

7. Toit de véhicule selon l'une quelconque des revendications 1 à 6.
**caractérisé en ce que** les dispositifs de fixation (18, 23, 24, 25) peuvent être déplacés dans leurs positions opérationnelles sur des côtés opposés de l'unité de support (7, 8, 8').

8. Toit de véhicule selon l'une quelconque des revendications 1 à 7,
**caractérisé en ce que** l'unité de support (7, 8) présente au moins un moyen de retenue ou d'appui (28) pouvant se déployer ou pivoter vers le haut.

9. Toit de véhicule selon l'une quelconque des revendications 1 à 8,
**caractérisé en ce que** l'unité de support (7, 8) présente sur sa face supérieure une surface d'appui (22).

10. Toit de véhicule selon l'une quelconque des revendications 1 à 9,
**caractérisé en ce que** la face inférieure de l'unité de support (7, 8) présente au moins un dispositif utilitaire (41 à 45) accessible depuis l'habitacle du véhicule ou défini pour l'habitacle du véhicule.

11. Toit de véhicule selon l'une quelconque des revendications 1 à 10,
**caractérisé en ce que** l'unité de support (7, 8, 8') présente au moins une boîte de chargement (36, 37) accessible depuis le dessus du toit.

12. Toit de véhicule selon l'une quelconque des revendications 1 à 11,
**caractérisé en ce que** l'unité de support (7, 8) présente des ouvertures d'entrée d'air (49) et/ou des ouvertures de sortie d'air (51) destinées à ventiler et/ou aérer l'habitacle du véhicule.

13. Toit de véhicule selon l'une quelconque des revendications 1 à 12,
**caractérisé en ce que** les dispositifs de fixation (18, 23, 24, 25) sont aménagés de manière interchangeable sur l'unité de support (7, 8, 8').

14. Toit de véhicule selon l'une quelconque des revendications 1 à 13,
**caractérisé en ce qu'**une rambarde (30) est respectivement montée fixe latéralement sur le toit de véhicule (1).

15. Toit de véhicule selon l'une quelconque des revendications 1 à 14,
**caractérisé en ce que** des couvercles (11, 12, 13, 17), en particulier des couvercles transparents, sont fixés sur le toit de véhicule (1) en plus de la au moins une unité de support (7, 8) et forment la couverture de toit.

16. Toit de véhicule selon l'une quelconque des revendications 1 à 15,
**caractérisé en ce que** l'unité de support (7, 8, 8') forme une partie rigidifiant la structure de toit.

17. Toit de véhicule selon l'une quelconque des revendications 1 à 16,
**caractérisé en ce que** deux unités de support (7, 8) sont aménagées l'une à côté de l'autre sur le toit de véhicule (1).
